# EUROPÄISCHE PATENTSCHRIFT

(11) **EP 1 177 035 B1**
(45) Veröffentlichungstag und Bekanntmachung des Hinweises auf die Patenterteilung: **27.04.2005**
(21) Anmeldenummer: 00927171.9
(22) Anmeldetag: 09.05.2000
(51) Int. Cl.: B01D 61/14, C08G 73/00, C08G 73/02, D21H 21/10

(54) **VERFAHREN ZUR FRAKTIONIERUNG VON IN WASSER LÖSLICHEN ODER DISPERGIERBAREN AMINOGRUPPENHALTIGEN POLYMEREN MIT BREITER MOLMASSENVERTEILUNG**
METHOD FOR FRACTIONATION OF WATER SOLUBLE OR DISPERSIBLE POLYMERS CONTAINING AMINO GROUPS WITH A BROAD MOLAR MASS DISTRIBUTION
PROCEDE POUR LE FRACTIONNEMENT DE POLYMERES A LARGE REPARTITION DE MASSE MOLAIRE, DISPERSIBLES OU SOLUBLES DANS L'EAU ET CONTENANT DES GROUPES AMINO

(30) Priorität: 10.05.1999 DE 19921507
(43) Veröffentlichungstag der Anmeldung: 06.02.2002
(73) Patentinhaber: BASF AKTIENGESELLSCHAFT, 67056 Ludwigshafen (DE)
(72) Erfinder: STEUERLE, Ulrich, D-69124 Heidelberg (DE); VOSS, Hartwig, D-67227 Frankenthal (DE); BERNBACH, Jürgen, D-67071 Ludwigshafen (DE); DECKER, Jürgen, D-67346 Speyer (DE); DYLLICK-BRENZINGER, Rainer, D-69469 Weinheim (DE); LORENZ, Klaus, D-67549 Worms (DE); MEIXNER, Hubert, D-67069 Ludwigshafen (DE); RÜBENACKER, Martin, D-67122 Altrip (DE)
(74) Vertreter: Kinzebach, Werner, Dr.
(86) Internationale Anmeldenummer: PCT/EP2000/004140
(87) Internationale Veröffentlichungsnummer: WO 2000/067884

(56) Entgegenhaltungen:
- EP-A- 0 512 175
- EP-B- 0 442 866
- WO-A-97/25367
- US-A- 4 144 123

## Beschreibung

Die Erfindung betrifft ein Verfahren zur Fraktionierung von in Wasser löslichen oder dispergierbaren aminogruppenhaltigen Polymeren mit breiter Molmassenverteilung durch Ultrafiltration.

Wasserlösliche aminogruppenhaltige Polymere werden seit langem als Retentions-, Entwässerungs- und Fixiermittel bei der Herstellung von Papier, als Promotor bei der Leimung von Papier mit Alkyldiketenen, als Flockungsmittel für Klärschlämme, als Haftvermittler bei der Herstellung von Verbundfolien, als Additiv in Haar- und Hautpflegemitteln und als Mittel zur Immobilisierung von anionischen Wirkstoffen eingesetzt.

In der Regel handelt es sich bei solchen aminogruppenhaltigen Polymeren um Additions- und/oder Kondensationsprodukte von aminogruppenhaltigen Bausteinen, wie Alkyleniminen, Di- und Oligoaminen, die gegebenenfalls mit Carbonsäuren, Carbonsäurederivaten, Polyethern, Polyestern und/oder Vernetzern umgesetzt sein können, siehe z. B. DE-B-1 771 814, US-A-2 182 306, US-A-3 203 910, US-A-4 144 123, EP-A-0 411 400, DE-A-2 162 567, US-A-4 066 494, DE-A-2 916 356, WO-A-94/12560, WO-A-94/14873 und Journal of Applied Polymer Science, Vol. 30, 4099-4111 (1984).

Die WO 97/25367 beschreibt ein Verfahren zur Herstellung von wasserlöslichen, Aminogruppen enthaltenden Kondensaten und Additionsprodukten durch Ultrafiltration von wässrigen Lösungen der Kondensations- oder Additionsprodukte an Membranen, wobei man 5 bis 95 Gew.-% der enthaltenen Kondensate oder Additionsprodukte als Permeat abtrennt. Die mit diesem Verfahren erhaltenen Aminogruppen enthaltenden Kondensate und Additionsprodukte weisen eine vergleichsweise enge Molmassenverteilung und sehr gute anwendungstechnische Eigenschaften als Retentions-, Entwässerungs- und Fixiermittel bei der Herstellung von Papier auf. Nachteilig an diesen Verfahren ist, dass die erhaltenen Aminogruppen enthaltenden Additions- oder Kondensationsprodukte sehr hohe Viskositäten von bis zu 850 mPas nach Brookfield, bezogen auf eine etwa 15 gew.-%ige Polymerlösung, aufweisen, was sich negativ auf den Ultrafiltrationsprozess auswirkt.

Die EP-B-0 442 866 beschreibt ein Verfahren zur Trennung und Wiederverwendung von Harnstoffformaldehyd-, Melaminformaldehyd- und Polyamidoamin-Epichlorhydrin-Harzen durch Ultrafiltration. Mit diesem Verfahren sollen Polymere mit hohem Molekulargewicht bereitgestellt werden und die Konzentration an Schadstoffen, wie Formaldehyd, reduziert werden. Das abgetrennte Permeat kann, gegebenenfalls nach Aufarbeitung, in die Polymerherstellung zurückgeführt werden. Es wird auch eine Anlage für das Verfahren beschrieben, die einen Polymerisationsreaktor, eine Ultrafiltrationseinheit und eine Permeataufarbeitung umfasst. Die Ultrafiltration wird in Batch-Fahrweise beschrieben, wobei ein Teil der Polymerlösung einem Vorratsbehälter entnommen, ultrafiltriert und anschließend in den Behälter zurückgeführt wird, und der Prozess so oft wiederholt wird, bis der Schadstoffgehalt im gewünschten Maß reduziert ist oder bis die gewünschte Konzentration des Polymeren erreicht ist. Die Möglichkeit einer kontinuierlichen Fahrweise wird lediglich angedeutet, nähere Angaben werden nicht gemacht.

Nachteilig an den diskontinuierlichen Verfahren zur Ultrafiltration von Polymeren ist, dass für eine hinreichende Trennung das Retentat immer wieder in den Produkttank rückgeführt werden muss, bis die gewünschte Konzentration erreicht ist. Nach ausreichender Trennung muss der Produkttank entleert, mit frischem Ausgangsmaterial befüllt und die Ultrafiltration erneut an- und eingefahren werden. Dies führt zu Ausfallzeiten beim Befüllen und Entleeren und zu schwankenden Produktqualitäten von Filtration zu Filtration. Um die Ausfallzeiten beim Befüllen und Entleeren zu vermeiden, kann eine diskontinuierliche Anlage mittels zweier Produkttanks getaktet betrieben werden, d. h. während aus dem Tank die Ultrafiltration durchgeführt wird, kann der andere Tank entleert und neu befüllt werden. Jedoch sind die für den getakteten Betrieb zusätzlichen Anlagen platz- und kostenintensiv. Um eine möglichst gleichmäßige Qualität der Trennungsprodukte zu gewährleisten, müssen bei diskontinuierlichem Betrieb die Filtereinheiten regelmäßig, d. h. in der Regel nach jedem Batch, gereinigt und/oder gewartet werden. Nachteilig ist ferner der große Viskositäts- und Druckanstieg gegen Ende der Ultrafiltration, der aus der zunehmenden Konzentration des Retentats resultiert und leistungsfähige Fördereinrichtungen und druckfeste Anlagen erfordert. Weiterhin muss bei hohen Viskositäten entweder der Transmembrandruck erhöht werden oder die Anströmung reduziert werden. Beides kann die Trennleistung negativ beeinflussen.

J. Hiddink, R. De Boer und P.F.C. Nooy berichten in Milk Science International 36 (11) 1981 über Untersuchungen zum Transmembranfluss bei der Ultrafiltration von Molke. Dabei wurde der Einfluss einer thermischen Vorbehandlung, des pH-Wertes, des Salzgehaltes und des eingesetzten Membrantyps untersucht. Für die Untersuchung wurde eine diskontinuierliche und eine kontinuierliche Ultrafiltrationsanlage eingesetzt, eine Abhängigkeit der Ergebnisse von der kontinuierlichen bzw. diskontinuierlichen Durchführung wurde nicht festgestellt.

Der vorliegenden Erfindung liegt daher die Aufgabe zugrunde, ein Verfahren zur Fraktionierung von zumindest teilweise wasserlöslichen, Aminogruppen enthaltenden synthetischen Polymeren bereitzustellen, das in der Praxis einfach durchzuführen ist und zu einem aminogruppenhaltigen Polymer mit geringerer Viskosität und mit zumindest vergleichbaren anwendungstechnischen Eigenschaften, wie z. B. guter Entwässerungs- und Retentionswirkung bei der Herstellung von Papier, führt.

Die Aufgabe wird erfindungsgemäß gelöst mit einem Verfahren zur Fraktionierung von in Wasser löslichen oder dispergierbaren synthetischen aminogruppenhaltigen Polymeren durch Ultrafiltration, wobei das Verfahren folgende Schritte umfasst:
a) Kontinuierliches Leiten der Polymerlösung oder -dispersion zu einer Ultrafiltrationseinheit und Vermischen mit aus Schritt d) rückgeführtem Retentat und gegebenenfalls im Wesentlichen polymerfreiem wässrigem Medium,
b) Auftrennen des Gemischs in der Ultrafiltrationseinheit in ein Permeat und ein Retentat,
c) Ausleiten des Permeats aus dem Verfahren,
d) Austragen eines Teils des Retentats; Rückführen des anderen Teils des Retentats in Schritt a),
e) Leiten des in Schritt d) ausgetragenen Teils des Retentats in wenigstens eine weitere Ultrafiltrationseinheit und Behandlung nach einem Verfahren mit den Schritten a) bis d).

Es hat sich überraschenderweise gezeigt, dass die mit diesem Verfahren erhaltenen aminogruppenhaltigen Polymere sehr gute anwendungstechnische Eigenschaften bei einer verringerten Viskosität aufweisen. Während beim Batch-Verfahren bei konzentrierter Fahrweise der Polymertransmembranfluss abnimmt, wird beim kontinuierlichen Verfahren beim Übergang zu höheren Konzentrationen überraschend ein erhöhter Polymertransmembranfluss beobachtet. Das führt dazu, dass beim erfindungsgemäßen Verfahren der relative Bedarf an Membranfläche und Förderleistung im Vergleich zu Batch-Verfahren deutlich sinkt, wenn man in konzentrierter Fahrweise arbeitet, obwohl konstant an der Endkonzentration des Polymeren gearbeitet wird. Hierdurch kann Filtrationswasser eingespart werden, und es fallen höher konzentrierte Permeate an. Hierdurch kann der Aufwand bei der gegebenenfalls nötigen Wiederaufkonzentration des Permeats deutlich verringert werden.

### Kurze Beschreibung der Figuren

Fig. 1 veranschaulicht eine einstufige Ultrafiltrationsanlage.

Fig. 2 zeigt eine für das erfindungsgemäße Verfahren geeignete vierstufige Ultrafiltrationsanlage, bei der die Stufen I bis IV hintereinander geschaltet sind.

Bei dem erfindungsgemäßen Verfahren führt man das Polymer in einem wässrigen Medium, vorzugsweise als wässrige Lösung oder wässrige Dispersion, einer Ultrafiltration zu und erhält eine Auftrennung des polymerhaltigen wässrigen Mediums in Retentat und Permeat. Dabei erreicht man in der Regel eine Fraktionierung des eingesetzten synthetischen aminogruppenhaltigen Polymeren, d. h. eine Auftrennung in verschiedene Teilmengen oder Fraktionen, die sich in der Polymerkonzentration, Polymerzusammensetzung und/oder Molekulargewichtsverteilung unterscheiden.

Das erfindungsgemäße Verfahren wird im Folgenden mit Bezug auf eine wässrige Polymerlösung näher erläutert. Sämtliche Ausführungen gelten entsprechend für wässrige Polymerdispersionen.

Bei der Ultrafiltration handelt es sich in der Regel um Membrantrennverfahren bzw. Membranfiltrationsverfahren, die sich vorzugsweise für die molmassenabhängige Trennung gelöster oder dispergierter Stoffe eignen. Zu Membranfiltrationsverfahren werden auch die Mikrofiltration, die Nanofiltration und die umgekehrte Osmose gezählt. Diese Verfahren unterscheiden sich im Wesentlichen durch die sog. Ausschlussgrenzen, die im Wesentlichen von der Art und der Porosität der eingesetzten Membranen abhängen. Für die Fraktionierung der synthetischen aminogruppenhaltigen Polymere im erfindungsgemäßen Verfahren eignen sich insbesondere die Ultrafiltration und die Mikrofiltration, die im Rahmen dieser Erfindung einheitlich unter dem Begriff Ultrafiltration zusammengefasst werden. Die umgekehrte oder reverse Osmose und die Nanofiltration eignen sich vorzugsweise zur Aufbereitung des beim erfindungsgemäßen Verfahren erhaltenen Permeats, z. B. durch Aufkonzentrieren.

Für die Ultrafiltration kann man sämtliche im Handel erhältlichen Membranen einsetzen, die eine Trenngrenze (auch als Ausschlussgrenze oder Cut-off-Grenze bezeichnet) für Polymere mit Molmassen von z. B. 1 000 bis 10 Millionen, vorzugsweise von 1 000 bis 500 000, haben. Besonders bevorzugt verwendet man Membranen mit Trenngrenzen für Molmassen von 3 000 bis 300 000. Die Trenngrenze der jeweils verwendeten Membranen kann der Molgewichtsverteilung der in Wasser löslichen oder dispergierbaren aminogruppenhaltigen Polymere, die im folgenden Text der Einfachheit halber auch als wasserlösliche Polymere, aminogruppenhaltige Polymere oder als Polymere bezeichnet werden, so angepasst werden, dass man 5 bis 95 Gew.-%, vorzugsweise 20 bis 90 Gew.-%, des eingesetzten Polymers abtrennen kann. Bei der Ultrafiltration werden niedermolekulare Anteile der Polymeren, deren Molmasse unterhalb der Trenngrenze liegt, als Permeat abgetrennt. Im Retentat verbleiben höhermolekulare Anteile des Polymers. Die Ultrafiltration umfasst im Rahmen der vorliegenden Erfindung wie vorstehend beschrieben auch die Mikrofiltration an Membranen, wobei man Membranen mit einem mittleren Porendurchmesser von 0,01 bis 10 µm, bevorzugt 0,05 bis 1 µm und insbesondere 0,1 bis 0,5 µm einsetzt. Durch die Abtrennung von niedermolekularen Anteilen mit dem Permeat erhält man im Retentat aminogruppenhaltige Polymere, bei denen der Anteil an Polymerteilchen mit höherer Molmasse gegenüber dem eingesetzten Polymer vor der Ultrafiltration erhöht ist. In der Regel erhält man mit diesem Verfahren Polymere, die eine engere Molmassenverteilung aufweisen.

Die Membranen können beispielsweise in Form von Rohren und Hohlfasern, Plattengeräten, Hohlfasermodulen oder Spiral-Wickel-Modulen eingesetzt werden. Dabei liegen die Durchmesser bzw. Kanalweiten in der Regel im Bereich von 0,5 bis 25 mm. Bei Rohren oder Hohlfasern sind insbesondere Durchmesser von 0,5 bis 2,5 mm geeignet. Bei Filtern auf Basis von Plattenmembranen, wie z. B. Plattengeräten oder Spiral-Wickel-Modulen, sind insbesondere Kanalweiten von 1 bis 5 mm geeignet. Geeignete Materialien für die Membranen sind beispielsweise regenerierte Cellulose, Celluloseacetat, Cellulosetriacetat, Polyamid, Polyacrylnitril, Acrylnitrilcopolymerisate, Polysulfon, Polyethersulfon, Copolymerisate des Vinylchlorids, Polyimid, Polyvinylidenfluorid, Polytetrafluorethylen, Polymethylmethacrylat, hydrolysierte Copolymerisate aus Ethylen und Vinylacetat, mit einem Hydrolysegrad der Vinylacetat-Gruppen von mindestens 50 %, Polycarbonat, Polyethylen, das nach dem Verfahren der Hochdruckpolymerisation von Ethylen hergestellt wird sowie HDPE (Polyethylen mit sehr hoher Dichte), Polypropylen, Kohlenstoff, mineralische oder keramische Membranen oder insbesondere mechanisch stabile Membranen wie metallische Membranen, z. B. Membranen aus Edelstahl, die gegebenenfalls mit einer Sekundärmembran verbunden sind. Die Sekundärmembran kann aus Titanoxid oder Zirkonoxid oder einem der oben genannten organischen Materialien, wie Polysulfon, bestehen. Vorzugsweise werden Membranen auf Basis von Polysulfon eingesetzt. Über Ultrafiltration und dafür geeignete Membranen wird beispielsweise zusammenfassend berichtet von Munir Cheryan in Ultrafiltration Handbook, Technomic Publishing Company, Inc., 1986.

Membranen, die für die Ultrafiltration geeignet sind, werden von zahlreichen Firmen angeboten, vgl. Katalog Internationales Treffen für chemische Technik und Biotechnologie ACHEMA 94, Frankfurt am Main.

Eine Ultrafiltrationseinheit umfasst im Allgemeinen ein oder mehrere, seriell und/oder parallel geschaltete Module, welche die Membrananordnung enthalten. Von Modulen spricht man, wenn Membranen zu größeren Gebilden zusammengesetzt sind, um die Membranenfläche für die Ultrafiltration zu vergrößern. Insbesondere Membranen in Form von Rohren oder Hohlfasern werden zu sog. Modulen zusammengefasst, z. B. in Form von Hohlfasermodulen oder Spiral-Wickel-Modulen. Ein Ultrafiltrationskreislauf kann ein oder mehrere, seriell und/oder parallel angeordnete Ultrafiltrationseinheiten aufweisen (ein Ultrafiltrationskreislauf mit mindestens einer Ultrafiltrationseinheit wird im Folgenden auch als Ultrafiltrationsstufe bezeichnet). In der Regel weist ein Ultrafiltrationskreislauf wenigstens eine Fördereinrichtung, wie z. B. eine Pumpe, auf. Beim erfindungsgemäßen Verfahren können auch mehrere, im Allgemeinen 2 bis 10 und insbesondere 2 bis 6, hintereinander geschaltete Ultrafiltrationskreisläufe zur Anwendung kommen. Bevorzugt ist in jedem Ultrafiltrationskreislauf eine Ultrafiltrationseinheit angeordnet. Vorzugsweise weisen die Ultrafiltrationseinheiten einer mehrstufigen Anlage Membranen mit im Wesentlichen gleichen Ausschlussgrenzen auf. Jedoch ist die Erfindung hierauf nicht limitiert.

Jeder Ultrafiltrationskreislauf einer mehrstufigen Anlage kann gegebenenfalls eine eigene Druck- und/oder Durchflussregelung aufweisen. Ferner kann jeder Ultrafiltrationskreislauf eine geregelte Zuführung für im Wesentlichen polymerfreies wässriges Medium aufweisen, die vorzugsweise zur Konzentrations-, Viskositäts-, Durchfluss- und/oder Druckeinstellung im erfindungsgemäßen Verfahren benutzt werden kann. Als Parameter für diese geregelte Zuführung können insbesondere Prozessparameter, wie Konzentration, Viskosität, Leitfähigkeit, Druck, Strömungsgeschwindigkeit und/oder Durchfluss herangezogen werden. Die geregelte Zuführung des wässrigen Mediums kann bevorzugt im Zulauf aller Stufen erfolgen. In einer weiteren bevorzugten Ausführungsform des Verfahrens weist die erste und/oder die letzte mehrerer Ultrafiltrationsstufen keine solche geregelte Zuführung auf. Die Zuführung erfolgt zweckmäßigerweise in die Leitung, durch die die Polymerlösung in den Kreislauf eingespeist wird.

Die Verschaltung bzw. Kopplung der Ultrafiltrationsstufen eines mehrstufigen Ultrafiltrationsverfahrens kann drucklos oder druckgesteuert über ein Ventil am Ein- oder Ausgang der Ultrafiltrationseinheit erfolgen. Vorzugsweise erfolgt die Verschaltung der Stufen drucklos, d. h. dass das Retentat einer Ultrafiltrationsstufe als Zulauf der nächsten Ultrafiltrationsstufe dient.

Vorzugsweise stellt man den Druck am Eingang der Ultrafiltrationseinheit auf einen Wert im Bereich von 1 bis 20 bar, bevorzugt 1,5 bis 10 bar und besonders bevorzugt 2 bis 5 bar, ein, wie z. B. etwa 3 bar oder etwa 4 bar (Eingangsdruck).

Vorzugsweise stellt man in der Ultrafiltrationseinheit einen Transmembrandruck im Bereich von 0,5 bis 10 bar, bevorzugt 1 bis 7,5 bar und besonders bevorzugt 1,5 bis 5 bar, ein.

Eine Ultrafiltrationseinheit kann, wie erwähnt 1, 2, 3 oder mehrere Ultrafiltrationsmodule umfassen. Bei parallel angeordneten Modulen ist der Eingangsdruck gleich dem Mittelwert aus den Eingangsdrücken der jeweiligen Module. Sind mehrere Module hintereinander, d. h. in Serie geschaltet, so gilt als Moduleingangsdruck immer der Eingangsdruck am ersten Modul in Flussrichtung. Vorzugsweise setzt man bei einer mehrstufigen Ultrafiltration auf der letzten Stufe Einheiten mit einem größeren Durchmesser oder einer größeren Kanalweite ein. Dadurch kann man z. B. auch bei einer Viskositätszunahme des polymerhaltigen Mediums auf der letzten Stufe bei vergleichbarem Druck wie auf den vorhergehenden Stufen eine vergleichbare Überströmung aufrechterhalten oder bei gleichbleibender Viskosität des polymerhaltigen Mediums bei vergleichbarem Druck eine höhere Überströmung erreichen. Geeignet ist beispielsweise ein 1,5- bis 3-facher Durchmesser bzw. eine 1,5- bis 3-fache Kanalweite.

Unter stationärem Zustand im Sinne dieses Verfahrens ist zu verstehen, dass zumindest die Polymereinspeisung und der Retentataustrag kontinuierlich, d. h. im Wesentlichen zeitlich konstant erfolgt. Vorzugsweise sind auch andere für das Verfahren wesentliche Prozessparameter in dem wässrigen Medium, welches das aminogruppenhaltige Polymer enthält, an jeder Stelle des erfindungsgemäßen Verfahrens im Wesentlichen zeitlich konstant. Wesentliche Prozessparameter im erfindungsgemäßen Verfahren sind insbesondere Druck, Temperatur, Polymerkonzentration und Molmassenverteilung.

Unter stationärem Zustand im Sinne der Erfindung ist nicht zu verstehen, dass die relevanten Prozessparameter während des gesamten Verfahrens bzw. in der gesamten Ultrafiltrationsanlage konstant sein müssen. Zum Beispiel ist der Druck in dem wässrigen Medium in der Regel nicht in der ganzen Anlage an allen Stellen gleich, sondern im Allgemeinen in oder nach der Fördereinrichtung, die das wässrige Medium durch die Anlage fördert, höher als z. B. am Ausgang einer Ultrafiltrationseinheit. Der Eingangsdruck (an der oder den Ultrafiltrationseinheiten) ist jedoch während des erfindungsgemäßen Verfahrens ebenso im Wesentlichen konstant wie der Ausgangsdruck der Ultrafiltrationseinheit(en). Das bedeutet, dass jeder Wert eines Prozessparameters an einem Ort von dem Wert an einem anderen Ort abweichen kann, dass aber der Wert an einem Ort betrachtet über einen langen Zeitraum im Wesentlichen konstant ist, d. h. zeitlich im Wesentlichen konstant ist. Bei solchen Systemen, bei denen kontinuierlich Edukte eingespeist und Produkt(e) entnommen werden, spricht man statt von einem stationären Zustand auch von einem Fließgleichgewicht oder Fließgleichgewichtszustand.

Nach dem erfindungsgemäßen Verfahren können in Wasser lösliche oder dispergierbare aminogruppenhaltige Polymere, die üblicherweise eine breite Molmassenverteilung aufweisen, in enger verteilte Polymere mit hochmolekularen Anteilen und in Polymere mit niedermolekularen Anteilen getrennt werden. Aminogruppen enthaltende Polymerisate sind bekannt. Sie sind z. B. in dem oben zitierten Stand der Technik beschrieben. Auf die dort angegebenen Publikationen wird hiermit in vollem Umfang Bezug genommen.

Es handelt sich dabei z. B. um
a) die z. B. in der WO 97/25367 beschriebenen Reaktionsprodukte von Alkylendiaminen oder Polyalkylenpolyaminen mit mindestens zwei funktionelle Gruppen enthaltenden Vernetzern. So erhältliche Polyethylenimine haben in der Regel eine breite Molmassenverteilung und mittlere Molmassen M_{w} von beispielsweise 120 bis 2·10⁶, vorzugsweise 430 bis 1·10⁶. Zu dieser Gruppe gehören auch mit Ethylenimin gepfropfte und mit Bisglycidylethern von Polyethylenglykolen vernetzte Polyamidoamine, die in der genannten US-A 4 144 123 beschrieben werden.
b) Reaktionsprodukte, die erhältlich sind durch Umsetzung von Michaeladditionsprodukten aus Polyalkylenpolyaminen, Polyamidoaminen, mit Ethylenimin gepfropften Polyamidoaminen sowie Mischungen der genannten Verbindungen und monoethylenisch ungesättigten Carbonsäuren, Salzen, Estern, Amiden oder Nitrilen mit mindestens bifunktionellen Vernetzern. Solche Reaktionsprodukte sind beispielsweise aus der WO-A-94/184743 bekannt. Zu ihrer Herstellung kommen außer den halogenhaltigen Vernetzern besonders die beschriebenen Klassen von halogenfreien Vernetzern in Betracht.
c) Wasserlösliche, vernetzte, teilweise amidierte Polyethylenimine, die aus der WO-A-94/12560 bekannt und erhältlich sind durch
   - Reaktion von Polyethyleniminen mit einbasischen Carbonsäuren oder ihren Estern, Anhydriden, Säurechloriden oder Säureamiden unter Amidbildung und
   - Umsetzung der amidierten Polyethylenimine mit mindestens zwei funktionelle Gruppen enthaltenden Vernetzern.

   Die mittleren Molmassen M_{w} der in Betracht kommenden Polyethylenimine können bis zu 2 Mio. betragen und liegen vorzugsweise in dem Bereich von 1 000 bis 50 000. Die Polyethylenimine werden partiell mit einbasischen Carbonsäuren amidiert, so dass beispielsweise 0,1 bis 90, vorzugsweise 1 bis 50 %, der amidierbaren Stickstoffatome in den Polyethyleniminen als Amidgruppe vorliegt. Geeignete, mindestens zwei funktionelle Doppelbindungen enthaltende Vernetzer sind oben genannt. Vorzugsweise werden halogenfreie Vernetzer eingesetzt.
d) Polyethylenimine sowie quaternisierte Polyethylenimine. Es kommen hierfür z. B. sowohl Homopolymerisate von Ethylenimin als auch Polymere in Betracht, die beispielsweise Ethylenimin (Aziridin) aufgepfropft enthalten. Die Homopolymerisate werden beispielsweise durch Polymerisieren von Ethylenimin in wässriger Lösung in Gegenwart von Säuren, Lewis-Säuren oder Alkylierungsmitteln wie Methylchlorid, Ethylchlorid, Propylchlorid, Ethylenchlorid, Chloroform oder Tetrachlorethylen hergestellt. Die so erhältlichen Polyethylenimine haben eine breite Molmassenverteilung und mittlere Molmassen M_{w} von beispielsweise 129 bis 2·10⁶, vorzugsweise 430 bis 1·10⁶.
   Die Polyethylenimine und die quaternisierten Polyethylenimine können gegebenenfalls mit einem mindestens zwei funktionelle Gruppen enthaltenden Vernetzer (siehe oben) umgesetzt sein. Die Quaternisierung der Polyethylenimine kann beispielsweise mit Alkylhalogeniden wie Methylchlorid, Ethylchlorid, Hexylchlorid, Benzylchlorid oder Laurylchlorid sowie mit beispielsweise Dimethylsulfat vorgenommen werden. Weitere geeignete Aminogruppen enthaltende Polymere, deren Qualität durch Ultrafiltration verbessert werden kann, sind durch Strecker-Reaktion modifizierte Polyethylenimine, z. B. die Umsetzungsprodukte von Polyethyleniminen mit Formaldehyd und Natriumcyanid unter Hydrolyse der dabei entstehenden Nitrile zu den entsprechenden Carbonsäuren. Diese Produkte können gegebenenfalls mit einem mindestens zwei funktionelle Gruppen enthaltenden Vernetzer (siehe oben) umgesetzt sein.
   Außerdem eignen sich phosphonomethylierte Polyethylenimine und alkoxylierte Polyethylenimine, die beispielsweise durch Umsetzung von Polyethylenimin mit Ethylenoxid und/oder Propylenoxid erhältlich und in der WO 97/25367 beschrieben sind. Die phosphonomethylierten und die alkoxylierten Polyethylenimine können gegebenenfalls mit einem mindestens zwei funktionelle Gruppen enthaltenden Vernetzer (siehe oben) umgesetzt sein.

Vorzugsweise werden die aminogruppenhaltigen Polymere ausgewählt unter Polyalkyleniminen, Polyalkylenpolyaminen, Polyamidoaminen, Polyalkylenglykolpolyaminen, mit Ethylenimin gepropften und anschließend mit mindestens bifunktionellen Vernetzern umgesetzten Polyamidoaminen und Gemischen und Copolymerisaten davon. Bevorzugt sind Polyalkylenimine, insbesondere Polyethylenimine, und die Derivate davon. Besonders bevorzugt sind mit Ethylenimin gepropfte und anschließend mit mindestens bifunktionellen Vernetzern umgesetzte Polyamidoamine.

Insbesondere werden die vorstehend genannten aminogruppenhaltigen Polymere unter den in der DE-B-24 34 816, der DE-A-196 21 300 und der WO 97/25367 beschriebenen Polymeren ausgewählt. Auf diese Publikationen wird hiermit in vollem Umfang Bezug genommen.

In einer bevorzugten Ausführungsform des erfindungsgemäßen Verfahrens werden Polymere eingesetzt, die durch Kondensation von C₂-C₁₂-Dicarbonsäuren, insbesondere Adipinsäure, mit Poly(alkylendiaminen), insbesondere Diethylentriamin, Trieethylentetramin und Tetraethylenpentamin, oder Mono-, Bis-, Tris- oder Tetra(aminopropyl)ethylendiamin oder Gemischen davon, Pfropfen der bei der Kondensation erhaltenen Polyamidoamine mit Ethylenimin und anschließendes Vernetzen erhältlich sind. Vorzugsweise wird mit soviel Ethylenimin gepfropft, dass das Polyamidoamin pro basischer Stickstoffgruppierung 2 bis 50, bevorzugt 5 bis 10 Ethylenimineinheiten aufgepfropft enthält. Das gepfropfte Polyamidoamin wird durch Umsetzung mit halogenfreien, mindestens bifunktionellen Vernetzern, bevorzugt Bisglycidylethern eines Polyalkylenglykols, vernetzt. Besonders bevorzugt sind Bisglycidylether von Polyethylenglykolen mit Molekulargewichten zwischen 400 und 5 000, insbesondere 500 bis 3 000, wie z. B. etwa 600 oder etwa 2 000.

Die Ultrafiltration von in Wasser löslichen aminogruppenhaltigen synthetischen Polymeren mit breiter Molmassenverteilung erfolgt vorzugsweise so, dass man ein wässriges Medium mit einem Polymergehalt von 3 bis 30 Gew.-%, bevorzugt 4 bis 15 Gew.-%, kontinuierlich in die Ultrafiltration einspeist und am Ende des Verfahrens ein Retentat mit einem Polymergehalt von größer als 5 Gew.-%, bevorzugt größer als 7 Gew.-%, kontinuierlich aus dem Ultrafiltrationskreislauf austrägt. In der Regel hat das aus dem Ultrafiltrationskreislauf ausgetragene Retentat einen Polymergehalt von weniger als 50 Gew.-%, insbesondere von kleiner als 30 Gew.-% und besonders bevorzugt kleiner als 20 Gew.-%. Die Ultrafiltration der aminogruppenhaltigen Polymere wird vorzugsweise so durchgeführt, dass man 5 bis 95, vorzugsweise 20 bis 90 Gew.-% der eingesetzten Polymere als Permeat abtrennt und die Polymeren mit höherer mittlerer Molmasse gegebenenfalls aus dem Retentat isoliert. Die Menge der als Permeat abgetrennten niedermolekularen Polymere beträgt in einer bevorzugten Ausführungsform 30 bis 70 Gew.-%.

Die Temperatur der wässrigen Polymerlösungen liegt bei der Ultrafiltration in der Regel in einem Bereich von 0 bis 100 °C, kann aber auch über 100 °C betragen, insbesondere, wenn die Ultrafiltration unter Druck durchgeführt wird. Vorzugsweise wird die Ultrafiltration bei einer Temperatur im Bereich von 40 bis 90 °C, besonders bevorzugt 50 bis 70 °C durchgeführt. Die Ultrafiltration wird im Allgemeinen unter erhöhtem Druck auf der Seite des Retentats durchgeführt, z. B. bei Drücken von 0,5 bis 50, vorzugsweise 1 bis 30 bar.

Der pH-Wert der wässrigen Lösungen von aminogruppenhaltigen Polymeren beträgt bei der Ultrafiltration z. B. in der Regel 2 bis 14, vorzugsweise 4 bis 13 und insbesondere 7 bis 12.

Das erfindungsgemäße Verfahren erfolgt mit einer Ultrafiltrationsanlage, die mindestens einen Zulauf (Einspeisung) für das zu filtrierende, aminogruppenhaltiges Polymer enthaltende wässrige Medium (Polymerzulauf), mindestens einen Ultrafiltrationskreislauf mit mindestens einer Ultrafiltrationseinheit, Mittel zum Austrag des Permeats, Mittel zum Austrag des Retentats sowie gegebenenfalls Fördervorrichtungen und Zuläufe für polymerfreies wässriges Medium (Mediumzulauf) aufweist.

Zum Anfahren der Anlage wird der Ultrafiltrationskreislauf über den Polymerzulauf mit Edukt (d. h. unfiltriertem polymerhaltigem wässrigem Medium) beschickt und das wässrige polymerhaltige Medium im Kreis gefahren. Beim Passieren der Ultrafiltrationseinheit wird das wässrige polymerhaltige Medium in Permeat und Retentat aufgetrennt. Das Retentat verbleibt im Kreislauf, das Permeat wird kontinuierlich aus dem Kreislauf ausgetragen. Der durch den kontinuierlichen Permeataustrag verursachte Verlust an wässrigem Medium wird durch konstante Zufuhr von Edukt und gegebenenfalls von im Wesentlichen polymerfreiem wässrigem Medium ausgeglichen. Gegebenenfalls kann das aus der Aufkonzentration des Permeats der Polymerfraktionierung mittels Dünnschichtverdampfung erhaltene Destillat oder das mittels reverser Osmose erhaltene Permeat als wässriges Medium für die Ultrafiltration eingesetzt werden. Das wässrige polymerhaltige Medium wird solange im Kreis gefahren, bis der gewünschte Filtrationsgrad erreicht ist. Während des Anfahrens ähnelt das erfindungsgemäße Verfahren somit den Verfahren des Standes der Technik. Wenn der gewünschte Filtrationsgrad im erfindungsgemäßen Verfahren erreicht ist, wird kontinuierlich Retentat mit dem gewünschten Filtrationsgrad entnommen und konstant so viel Edukt und gegebenenfalls im Wesentlichen polymerfreies wässriges Medium, z. B. Destillat aus der Dünnschichtverdampfung oder bevorzugt Permeat aus der reversen Osmose, zugefahren, dass der Filtrationsgrad und der Retentataustrag konstant bleiben, d. h. das Verfahren befindet sich jetzt im stationären Zustand. Im stationären Zustand weist das im Kreislauf befindliche polymerhaltige wässrige Medium im Wesentlichen den gewünschten Filtrationsgrad und/oder die gewünschte Konzentration auf, d. h. es liegt ständig in einem Zustand vor, der dem Endzustand des diskontinuierlichen Verfahrens des Standes der Technik entspricht.

Die Regelung des kontinuierlichen Retentataustrags, d. h. der Menge an Retentat, die pro Zeiteinheit aus dem Ultrafiltrationskreislauf kontinuierlich ausgetragen wird, kann über verschiedene Prozessparameter, wie z. B. Polymerkonzentration, Viskosität, Leitfähigkeit, Durchfluss, Druck, insbesondere den Eingangsdruck der Ultrafiltrationseinheit(en), Strömungsgeschwindigkeit, insbesondere die Anströmgeschwindigkeit und die Überströmung erfolgen.

Die Regelung des Austrags erfolgt vorzugsweise entweder über den Eingangsdruck der Ultrafiltrationseinheit und/oder über die Polymerkonzentration, z. B. in Form einer Online-Feststoffbestimmung des erhaltenen Retentats, oder alternativ durch Messung der Polymerkonzentration und des Flusses des eingespeisten Polymers (Edukt) und des Retentats beim Austrag auf dem Verfahren. Bei der ersten Variante spricht man in der Regel von einem druck- bzw. viskositätsgesteuerten Austrag, bei der zweiten Variante von einem abtrenngradgesteuerten Austrag.

In der Regel weisen die bei dem erfindungsgemäßen Verfahren eingesetzten wasserlöslichen, aminogruppenhaltigen Polymere eine breite Molmassenverteilung M_{w}/Mₙ, vorzugsweise eine M_{w}/Mₙ von größer als 100, insbesondere größer als 200 und besonders bevorzugt im Bereich von 300 bis 1000, auf. So können beispielsweise mit Ethylenimin gepfropfte, vernetzte Polyamidoamine eine Molmassenverteilung M_{w}/Mₙ von etwa 400 haben. Die Bestimmung der Molmassenverteilung erfolgt durch Gelpermeationschromatographie, bezogen auf Pullulan-Standards, mit Wasser als Elutionsmittel. Für das erfindungsgemäße Verfahren eignen sich vorzugsweise Polymerausgangslösungen oder -dispersionen mit Brookfield-Viskositäten (siehe unten) im Bereich von 10 bis 1000 mPas. Die erfindungsgemäß hergestellten Retentate haben beispielsweise Viskositäten von 20 bis 2 500, vorzugsweise 50 bis 800 und besonders bevorzugt 80 bis 300 mPas (gemessen in einem Brookfield-Viskosimeter an 10 gew.- %igen wässrigen Polymerlösungen bei 20 °C und pH 10) und eine Molmassenverteilung M_{w}/Mₙ von beispielsweise 2 bis 350, vorzugsweise 10 bis 300.

Vorzugsweise wird die Ultrafiltration so durchgeführt, dass das Verhältnis der Molmassenverteilung des eingespeisten Polymers zu der Molmassenverteilung des mit dem Verfahren erhaltenen Retentats größer als 1,1, insbesondere größer als 1,2 und besonders bevorzugt größer 1,3 ist, z. B. etwa 1,5, etwa 2 oder etwa 10.

Das erfindungsgemäße Verfahren zur Fraktionierung von aminogruppenhaltigen Polymeren durch Ultrafiltration umfasst die Schritte a)-e).

Wenn das erfindungsgemäße Verfahren mehr als zwei Stufen umfasst, werden die vorstehend beschriebenen Verfahrensschritte vorzugsweise sinngemäß auf die weiteren Stufen angewendet.

Vorzugsweise umfasst das Verfahren eine vorgeschaltete Anfahrphase, die folgende Schritte aufweist:
a) Kontinuierliches Leiten der Polymerlösung oder -dispersion zu einer Ultrafiltrationseinheit,
b) Auftrennen der Polymerlösung oder -dispersion in der Ultrafiltrationseinheit in ein Permeat und ein Retentat,
c) Ausleiten des Permeats aus dem Verfahren,
d) Vermischen des gesamten Retentats mit der Polymerlösung oder -dispersion im Schritt a) und gegebenenfalls mit im Wesentlichen polymerfreiem Medium und Leiten des Gemischs zu der Ultrafiltrationseinheit, bis im Retentat der gewünschte Fraktionierungsgrad erreicht ist.

Die bei der Fraktionierung als Permeat abgetrennten niedermolekularen Anteile an Polymeren können in den Herstellungsprozess der bei der Ultrafiltration als Ausgangsprodukte eingesetzten wasserlöslichen Polymeren zurückgeführt werden, d. h. sie werden zur Synthese von breit verteilten, wasserlöslichen, aminogruppenhaltigen Polymeren eingesetzt, die dann erneut der Ultrafiltration unterworfen werden können. Sofern die Konzentration des Permeats der Fraktionierung (Gehalt an aminogruppenhaltigem Polymer) niedriger ist als z. B. für eine Rückführung in die Herstellung der Polymere gewünscht, kann dieses Permeat aufkonzentriert werden, z. B. durch Abdestillieren von Wasser, vorzugsweise durch Dünnschichtverdampfung, oder durch Entfernen von Wasser durch Membranfiltrationsverfahren, deren Membranen vorzugsweise geringere Porendurchmesser aufweisen als die zuvor bei der Fraktionierung des Polymers eingesetzten Membranen. Insbesondere für die Aufkonzentrierung des Permeats geeignete Membranfiltrationsverfahren sind die sogenannte enge Ultrafiltration, die Nanofiltration und die reverse Osmose bzw. umgekehrte Osmose. Diese Verfahren werden im Folgenden einheitlich unter dem Begriff reverse Osmose oder umgekehrte Osmose zusammengefasst. Die Schritte des Aufkonzentrierens können als Teil des erfindungsgemäßen Verfahrens oder separat in einer eigenen Anlage durchgeführt werden. In beiden Fällen findet die Aufkonzentration vorzugsweise außerhalb des Ultrafiltrationskreislaufes statt.

Bei der umgekehrten Osmose werden vorzugsweise Membranen mit einer Ausschlussgrenze für elektrisch neutrale Moleküle von 50 bis 5 000 Dalton eingesetzt. Beispielsweise sind Membranen mit Trenngrenzen von 50 bis 200 Dalton und NaCl-Rückhaltungen von 50 bis 99,9 % (meist als reverse Osmose-Membran bezeichnet), Membranen mit Trenngrenzen von 150 bis 2000 Dalton und NaCl-Rückhaltungen von 0 bis 60 % (meist als Nanofiltrations-Membranen bezeichnet) sowie Membranen mit Trenngrenzen von 1000 bis 5000 Dalton und NaCl-Rückhaltungen von 0 bis 20 % (meist als Membranen für die enge Ultrafiltration bezeichnet), oder Kombinationen davon geeignet. Als Membranmaterialien eignen sich vorzugsweise die bereits oben genannten Materialien und insbesondere polymere Materialien, wie Polyamid, Polyimid, Polysulfon und Polyethersulfon, oder nichtpolymere Materialien, wie keramische Werkstoffe, z. B. auf Basis von Al₂O₃ oder TiO₂, oder Kohlenstoff. Geeignet sind z. B. Membranen in Form von Rohren, Hohlfasern, Hohlfasermodulen, Flachmodulen oder Spiral-Wickel-Modulen. Geeignete Membranen sind z. B. Desal 3 und Desal 5 der Fa. Desal und HO51 der Fa. Osmonics. Das Permeat kann vor der Aufkonzentration gesammelt und anschließend der Aufkonzentration zugeführt werden. Vorzugsweise wird die Aufkonzentration des aus dem erfindungsgemäßen kontinuierlichen Verfahren erhaltenen Permeats kontinuierlich durchgeführt. In diesem Fall kann auf die aufwendige Sammlung des Permeats in Sammelbehältern verzichtet werden, was gegenüber dem Stand der Technik eine Zeit-, Platz- und Kostenersparnis darstellt. Besonders geeignet für die kontinuierliche Aufkonzentration des Permeats ist eine ein-, zwei- oder mehrstufige umgekehrte Osmose. Dazu wird der kontinuierlich anfallende Permeatstrom vorzugsweise mit einem Prozessdruck von 10 bis 120 bar, insbesondere 40 bis 70 bar, und einer Prozesstemperatur von 5 bis 150 °C, insbesondere 10 bis 100°C und besonders bevorzugt 30 bis 70 °C, der umgekehrten Osmose zugeführt. Vorzugsweise wird die umgekehrte Osmose bei einer Membranüberströmung von 0,05 bis 5 m/s und insbesondere 0,1 bis 4 m/s durchgeführt. Für die Durchführung der umgekehrten Osmose an Spiral-Wickel-Modulen haben sich Membranüberströmungen von 0,1 bis 1,5 m/s und insbesondere 0,2 bis 1 m/s bewährt. Durch Kopplung der erfindungsgemäßen kontinuierlichen Fraktionierung durch Ultrafiltration mit einer kontinuierlichen Aufkonzentrierung des Fraktionierungspermeats durch reverse Osmose erhält man gegenüber Verfahren, die eine diskontinuierliche Ultrafiltration mit einer anschließenden Aufkonzentrierung des Permeats beinhalten, die folgenden weiteren Vorteile. Da das aus der erfindungsgemäßen kontinuierlichen Ultrafiltration ausgetragene Permeat im Wesentlichen in konstanter Menge, konstanter Zusammensetzung und konstanter Polymerkonzentration, anfällt, lässt sich die anschließende kontinuierliche umgekehrte Osmose besonders vorteilhaft durchführen, was z. B. Effizienz und leichte Regelbarkeit des Verfahrens betrifft. Darüber hinaus benötigt die Aufkonzentration keine Kapazitätsreserven, die beim Batch-Verfahren durch die sich ständig ändernde Permeatkonzentration, -zusammensetzung und -menge erforderlich sind.

Wenn das Permeat aufkonzentriert wird, stellt man z. B. eine Konzentration von 5 bis 50, vorzugsweise 10 bis 30 Gew.-% an Polymer ein.

In einer bevorzugten Ausführungsform des erfindungsgemäßen Verfahrens führt man eine wie vorstehend beschriebene kontinuierliche ein- oder mehrstufige Ultrafiltration durch, führt das kontinuierlich erhaltene Permeat einer kontinuierlichen Aufkonzentration, insbesondere einer ein- oder mehrstufigen Aufkonzentration durch umgekehrte Osmose, zu, in der das Permeat der Ultrafiltration auf eine Polymerkonzentration im Bereich von 5 bis 35, vorzugsweise 10 bis 30 Gew.-% aufkonzentriert wird. Besonders vorteilhaft wird das erhaltene Konzentrat zur Herstellung der erfindungsgemäß zu fraktionierenden Polymere eingesetzt, vorzugsweise durch Pfropfen mit Ethylenimin und anschließender Vernetzung mit mindestens 2 funktionelle Gruppen aufweisenden Vernetzern, und die so erhaltenen Polymere werden der erfindungsgemäßen kontinuierlichen Ultrafiltration unterworfen. Das erhaltene Permeat aus der reversen Osmose wird bevorzugt als wässriges Medium für die Ultrafiltration wieder eingesetzt.

Bezüglich der kontinuierlichen mehrstufigen Ultrafiltration hat sich überraschenderweise gezeigt, dass beim Arbeiten in konzentrierterer Fahrweise, z. B. in einer 4-stufigen kontinuierlichen Ultrafiltration, die Polymertransmembranflüsse der Batch-Fahrweise erreicht werden können. Das erfindungsgemäße Verfahren bietet somit eine große Zahl von Vorteilen gegenüber einem Batch-Verfahren:
- geringerer Wasserbedarf für die Trennung
- höhere Permeatkonzentration
- geringerer Aufwand bei der Aufkonzentration des Permeats
- gleichmäßiger Anfall des Permeats (keine Spitzenanfälle)

Überraschenderweise hat sich gezeigt, dass mit dem erfindungsgemäßen Verfahren andere Retentate und Permeate erhalten werden als bei der diskontinuierlichen Ultrafiltration des Standes der Technik, selbst wenn in beiden Fällen gleiche Ultrafiltrationseinheiten bzw. gleiche Ultrafiltrationsmembranen eingesetzt werden. Die mit dem erfindungsgemäßen Verfahren hergestellten Retentate weisen bei gleicher Polymerkonzentration und gleichem Anreicherungsgrad in der Regel geringere Viskositäten bei gleicher Wirksamkeit auf.

Durch das erfindungsgemäße Verfahren ist daher auch ein aminogruppenhaltiges synthetisches Polymer erhältlich in Form einer Lösung, z. B. in Form des bei dem erfindungsgemäßen Ultrafiltrationsverfahren erhaltenen Retentats oder eines Konzentrats davon oder in fester Form durch Gewinnung des Polymers aus dem Retentat.

Die in Form des Retentats erhältlichen Polymere werden vorzugsweise als Retentions-, Entwässerungs-, Flockungs- und Fixiermittel bei der Herstellung von Papier verwendet. Sie werden zu diesem Zweck dem Papierstoff in den üblichen Mengen von beispielsweise 0,01 bis 1 Gew.-% zugesetzt. Gegenüber der gleichen Menge an aminogruppenhaltigen Polymeren gleicher Zusammensetzung, die durch diskontinuierliche Ultrafiltration hergestellt wurden, erhält man mit dem im Retentat verbleibenden Anteil an wasserlöslichen, aminogruppenhaltigen Kondensaten und/oder Additionsprodukten eine zumindest vergleichbare Retentions- und Entwässerungswirkung. Überraschenderweise aber ist die Viskosität des Retentats erheblich geringer. Das Retentat ist deshalb wesentlich besser handhabbar.

Ebenso sind die als Retentat anfallenden Polymere in Kombination mit anionischen, neutralen oder kationischen hochmolekularen Polyacrylamiden in hervorragender Weise als Retentions-, Entwässerungs- oder Fixiermittel geeignet. Ähnliche Systeme sind aus der Literatur bekannt, vgl. EP-A-0 223 223, EP-A-0 235 893 und EP-A-0 335 575.

Auch Kombinationen der als Retentat anfallenden Polymeren mit kolloidaler Kieselsäure bzw. Bentoniten oder zusätzlich mit anionischen, neutralen oder kationischen hochmolekularen Polyacrylamiden als dritter Komponente sind in ganz besonderer Weise als Retentions-, Entwässerungs- oder Fixiermittel bei der Herstellung von Papier einsetzbar. Verfahren zur Herstellung von Papier mit kationischen Hilfsmitteln, die keiner besonderen Nachbehandlung wie zum Beispiel einer Ultrafiltration unterworfen wurden, sind beispielsweise bekannt aus EP-A-0 223 223, EP-A-0 235 893 und EP-A-0 335 575. Setzt man dabei die nach dem erfindungsgemäßen Verfahren erhältlichen Retentate ein, so erhält man eine signifikante Verbesserung der Entwässerungsgeschwindigkeit und Retention bei der Papierherstellung.

Die bei der Ultrafiltration als Retentat anfallenden Anteile an Polymeren werden außerdem als Flockungsmittel für Klärschlämme, als Haftvermittler bei der Herstellung von Verbundfolien, als Additiv in Haar- und Hautpflegemitteln und als Mittel zur Immobilisierung von anionischen Wirkstoffen z. B. bei der Herstellung von Medikamenten, im Pflanzenschutz oder im Materialschutz, z. B. bei der Konservierung von Holz, verwendet.

Als Haftvermittler für die Herstellung von Verbundfolien werden vorzugsweise die bei der Ultrafiltration erhältlichen Retentate von Polyethyleniminen verwendet, die eine mittlere Molmasse M_{w} von beispielsweise 10⁵ bis 2·10⁶ haben. Solche Retentate ergeben festere Verbunde mit einer erhöhten Alterungsbeständigkeit. Da die niedermolekularen Bestandteile aus den ultrafiltrierten Polyethyleniminen abgetrennt sind, eignen sich die Retentate insbesondere als Primer für die Herstellung von Lebensmittelverpackungen sowie als Additiv in Haar- und Hautpflegemitteln.

Die nachfolgenden Beispiele erläutern die Erfindung ohne sie zu begrenzen.

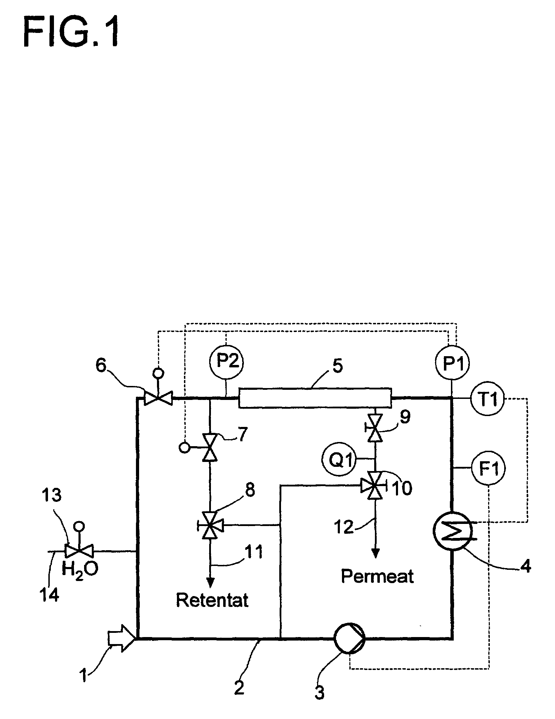

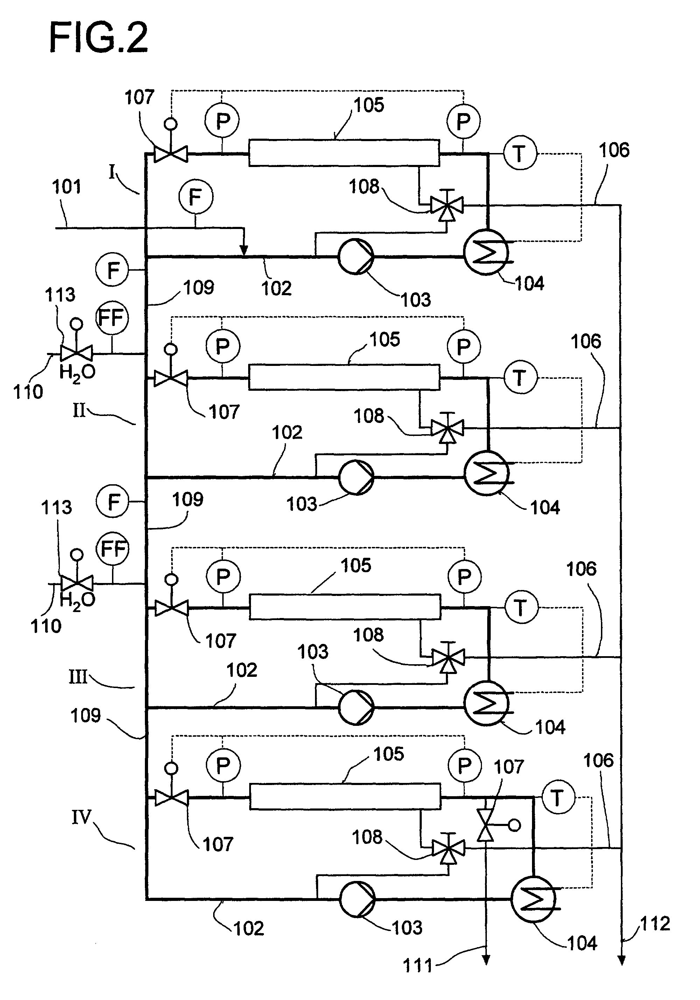

Zur Veranschaulichung wird zunächst ein einstufiges Verfahren anhand der Figur 1 erläutert. Das erfindungsgemäße Verfahren wird anschließend anhand der Figur 2 erläutert.

In der einstufigen Ultrafiltrationsanlage der Figur 1 gibt 1 den Einspeisungsort und die Umlaufrichtung des wässrigen polymerhaltigen Mediums an. Der Ultrafiltrationskreislauf 2 umfasst eine Umlaufpumpe 3, einen (optionalen) Wärmetauscher 4 und eine Ultrafiltrationseinheit bzw. ein Membranmodul 5 sowie einen Auslass 11 für Retentat und 12 für Permeat. Gewünschtenfalls kann durch Zugabe von wässrigem Medium über 14 und Ventil 13 die gewünschte Konzentration, Viskosität und/oder der gewünschte Druck eingestellt werden. Ferner sind Hilfseinrichtungen, wie Drosselventile 6 und 7, Hähne 8, 9 und 10, sowie Mess- und Regeleinrichtungen P1, P2, T1 und F1 für Druck, Temperatur und Fluss vorhanden, welche die Drosselventile 6 und 7, Wärmetauscher 4 und die Umlaufpumpe 3 steuern.

Zum Anfahren der Anlage wird der Kreislauf 2 mit der zu filtrierenden Polymerlösung über 1 geflutet. Die Polymerlösung wird dann über die Ultrafiltrationseinheit bzw. das Membranmodul 5 im Kreislauf gefahren, wobei der Transmembrandruck über Ventil 6 geregelt wird. Über den Hahn 10 wird solange Permeat durch freien Ablauf ausgetragen, bis im Kreislauf die gewünschte Konzentration der Polymerlösung erreicht ist. Der Retentatablauf wird dann mittels Hahn 8 auf freien Ablauf gestellt. Die zu diesem Zeitpunkt vorliegende Stellung des Drosselventils 6 wird fixiert und der Eingangsdruck vor der Ultrafiltrationseinheit 5 wird über das Drosselventil 7 konstant auf den zu diesem Zeitpunkt anstehenden Wert geregelt. Auf diese Weise wird Retentat druckgesteuert ausgetragen und das Permeat läuft frei ab. Ausgetragenes Retentat und Permeat werden durch frische, unfiltrierte Polymerlösung ersetzt, die durch den Sog der Umlaufpumpe 3 über 1 angesaugt wird.

Bei der Anlage der Figur 2 sind 4 Ultrafiltrationskreisläufe I bis IV hintereinander geschaltet. Die wässrige Polymerlösung wird über 101 eingespeist. Der Ultrafiltrationskreislauf 102 jeder Stufe umfasst eine Umlaufpumpe 103, einen optionalen Wärmetauscher 104, eine Ultrafiltrationseinheit bzw. ein Membranmodul 105 und einen Auslass für das Permeat 106. Ferner weist jede Stufe Hilfseinrichtungen, wie Drosselventile 107, Hähne 108 sowie Messund Regelkreise P, T, F und FF für Druck, Temperatur und Fluss auf (diese sind mit gestrichelten Linien eingezeichnet). Das Retentat gelangt über Leitungen 109 von einer Ultrafiltrationsstufe in die nächste Ultrafiltrationsstufe und kann dabei durch Zugabe von wässrigem Medium über 110 und die Ventile 113 auf die gewünschte Konzentration, Viskosität und/oder den gewünschten Druck eingestellt werden. Der Austrag des Retentats erfolgt über den Auslass 111 und der Austrag des Permeats durch Auslass 112.

Das Anfahren erfolgt durch Fluten der Anlage mit der zu filtrierenden Polymerlösung. Diese wird dann in jeder Stufe im Kreislauf gefahren, wobei jeweils ein Teil des Retentats der Stufen I bis III über die Leitung 109 in die nächstfolgende Stufe eingespeist wird, bis in der Stufe IV die gewünschte Konzentration der Polymerlösung erreicht ist. Das Retentat wird dann über den Auslass 111 druckgesteuert ausgetragen, Permeat läuft frei über die Auslässe 106 bzw. 112 ab. Retentat und Permeat werden durch frische Polymerlösung ersetzt, die durch den Sog der Umlaufpumpe 103 des Kreislaufs I über 101 angesaugt wird. Gewünschtenfalls kann über die Leitungen 110 und eine Verhältnisregelung FF Wasser zum Verdünnen eingespeist werden. Die letzte Stufe (Stufe IV) kann auch als reine Konzentrationsstufe betrieben werden.

Im Übrigen gelten die folgernden Definitionen:
Transmembrandruck = (Druck Moduleingang + Druck Modulausgang) / 2 - Druck Permeatseite;
Polymertransmembranfluss = Menge an Polymer in kg, berechnet als Feststoff, das pro Stunde durch 1 m² Filterfläche permeiert;
Anströmgeschwindigkeit = (Angeströmtes Volumen / Zeit) pro angeströmte Fläche;
Angeströmte Fläche (bei Hohlfasern) = Zahl der Hohlfasern x (Faserinnendurchmesser / 2)² x pi;
Massenaustausch = zugesetzte Menge Wasser, bezogen auf die Menge Ausgangslösung zu Beginn der Ultrafiltration;
Die Prozentangaben in den anschließenden Beispielen bedeuten Gewichtsprozent, sofern sich nichts anderes ergibt.

Die Viskositäten wurden - falls aus den Beispielen nichts anderes hervorgeht - in einem Brookfield-Viskosimeter bei 20 °C, einer Konzentration von 10 Gew.-% und einem pH-Wert von 10 gemessen.

In den Beispielen, in denen eine Ultrafiltration beschrieben ist, wurden Hohlfaserkartuschen der Firma A/G-Technology Corp., Needham, MA, USA, verwendet, welche zum Teil seriell verschaltet wurden, beispielsweise vom Typ UFP-100-E-4A (Filterfläche 0,042 m²; Hohlfaserdurchmesser 1 mm; Länge 36 cm), Typ UFP-500-E-6A bzw. UFP-500-H-6E (Filterfläche 0,56 m² bzw. 0,44 m²; Hohlfaserdurchmesser 1 mm bzw. 2 mm), Typ UFP-500-E-85 (Filterfläche 8,8 m²; Hohlfaserdurchmesser 1 mm), UFP-500-152M (Filterfläche gesamt 18,8 m²; Hohlfaserdurchmesser 1 mm). Sofern nicht explizit anders erwähnt, lag die gesamte Hohlfaserlänge bei 127 cm.

### I. Herstellung der Polymere

### Ia. Polymer 1

Nach der in der DE-B-24 34 816, Beispiel 3, angegebenen Vorschrift wird durch Kondensieren von Adipinsäure mit Diethylentriamin ein Polyamidoamin hergestellt und anschließend in wässriger Lösung mit soviel Ethylenimin gepfropft, dass das Polyamidoamin pro basischer Stickstoffgruppierung 6,7 Ethylenimin-Einheiten aufgepfropft enthält. Eine 10 %ige wässrige Lösung dieses Polymers (Polymer 1a) hat eine Viskosität von 22 mPas. Das Polymer 1a wird durch Umsetzung mit einem Bis-Glycidylether eines Polyethylenglykols der mittleren Molmasse von 2000 gemäß den Angaben in Beispiel 3 der DE-B-24 34 816 vernetzt. Man erhält ein Ethylenimin-Einheiten enthaltendes Polymer (Polymer 1) mit einer breiten Molmassenverteilung (M_{w}/Mₙ von 400) und einer Viskosität von 120 mPas (bestimmt in 10%iger wässriger Lösung bei 20 °C und pH 10). Die Konzentration der wässrigen Lösung beträgt 12,5 %, der pH-Wert liegt bei pH= 10.

### Ib. Polymer 2

Polymer 1a (mit Ethylenimin gepfropftes Polyamidoamin) wird durch Umsetzung mit einem Bis-Glycidylether eines Polyethylenglykols der mittleren Molmasse von 600 gemäß den Angaben in Beispiel 3 der DE-B-24 34 816 vernetzt. Man erhält ein Ethylenimin-Einheiten enthaltendes Polymer (Polymer 2) mit einer breiten Molmassenverteilung (M_{w}/Mₙ von 400) und einer Viskosität von 120 mPas (bestimmt in 10%iger wässriger Lösung bei 20 °C und pH 10). Die Konzentration der wässrigen Lösung beträgt 12,5 %, der pH-Wert liegt bei pH= 10.

### II. Vergleichsbeispiele

### Vergleichsbeispiel VB1:

### Diskontinuierliche Ultrafiltration mit verdünnter Fahrweise (1a) und Fahrweise im Konzentrationsmodus (1b)

3,1 kg Polymer 1 mit einem Feststoffgehalt von 12,5 % werden in einem Vorratsgefäß vorgelegt. Das Polymer wird mittels einer Verdrängerpumpe mit einer anfänglichen Anströmgeschwindigkeit der Hohlfasern von 1,0 m/s über ein Hohlfasermodul mit einer Filterfläche von 0,04 m², einem Hohlfaserdurchmesser von 1 mm und einer Länge von 36,2 cm gepumpt und das Retentat zurück ins Vorratsgefäß geleitet. Der Transmembrandruck wird zu Versuchsbeginn mittels eines Ventils am Modulausgang auf 2,1 bar geregelt. Nach dem Start der Filtration wird der Eingangsdruck durch Anpassung der Pumpenleistung konstant auf 3,4 bar gehalten. Die Versuchstemperatur lag bei 60 °C.
1a. Während der Ultrafiltration wird durch Wassernachdosierung in das Vorratsgefäß der Füllstand im Vorratsgefäß konstant gehalten, bis ein Massenaustausch von 4 erreicht war, d. h. die vierfache Menge Wasser, bezogen auf die Menge der Ausgangslösung zu Beginn der Ultrafiltration, zugesetzt worden war. Anschließend wurde ohne weiteren Wasserzusatz unter Füllstandsabsenkung weiterfiltriert und damit das Retentat aufkonzentriert. Die Ergebnisse dieses Versuchs sind in Tabelle 6 zusammengefasst.
1b. Während der Ultrafiltration wurde nur 91 % der als Permeat ausgetragenen Flüssigkeitsmenge durch Zufuhr von Wasser ersetzt, d. h. es wurde unter permanenter Füllstandsabsenkung ultrafiltriert. Die Ergebnisse dieses Versuchs sind in Tabelle 6 zusammengefasst.

### Vergleichsbeispiel VB2:

### Diskontinuierliche eingangsdruckgesteuerte Ultrafiltration in verdünnter Fahrweise (2a) und Fahrweise im Konzentrationsmodus (2b)

Polymer 2 wurde in einem Vorratsgefäß vorgelegt und mittels einer Verdrängerpumpe mit einer konstanten Anströmgeschwindigkeit der Hohlfasern von 0,5 m/s über Hohlfasermodule (Filterfläche 0,56 m², Hohlfaserdurchmesser 1 mm, Gesamtlänge 127 cm) gepumpt und zurück in das Vorratsgefäß geführt. Der Transmembrandruck wurde mittels eines Ventils am Modulausgang während des Versuchs auf 2,1 bar geregelt. Gegen Ende des Versuchs wurde die Anströmgeschwindigkeit bis auf 0,3 m/s zurückgeregelt, so dass der Eingangsdruck am Modul 4 bar nicht überschritt. Die Versuchstemperatur lag bei 65 °C.

### VB2a:

Es wurden 10,3 kg Polymer 2 mit einem Feststoffgehalt von 12,3 % eingesetzt. Während der Ultrafiltration wurde durch Wassernachdosierung ins Vorratsgefäß der Füllstand im Vorratsgefäß bis zu einem Massenaustausch von 2,4 konstant gehalten. Anschließend wurde die Ultrafiltration ohne Wasserzusatz durchgeführt, bis der Füllstand im Vorratsgefäß 47 % des Anfangsfüllstands aufwies. Die Ergebnisse dieses Versuchs sind in Tabelle 6 zusammengefasst.

### VB2b:

Es wurden 7,74 kg Polymer 2 mit einem Feststoffgehalt von 16 % vorgelegt. Die Wasserzudosierung wurde so geregelt, dass über die ganze Versuchszeit am Ultrafiltrationsmodul ein Eingangsdruck von 4 bar vorlag. Die Ultrafiltration wurde durchgeführt, bis der Feststoffgehalt des Retentats bei 10,5 % lag, was einem Massenaustausch von 1,75 entspricht. Die Ergebnisse dieses Versuchs sind in Tabelle 6 zusammengefasst.

### Vergleichsbeispiel VB3:

### Diskontinuierliche Ultrafiltration zum Erzielen eines hohen Feststoffgehalts

2000 kg Polymer 2 wurden in einem Vorratsgefäß vorgelegt und mittels einer Verdrängerpumpe mit einer konstanten Anströmgeschwindigkeit von 0,5 m/s über Module mit einem Hohlfaserdurchmesser von 1 mm, einer Gesamtlänge von 127 cm und einer Gesamtfilterfläche von 64 m² gepumpt und anschließend in das Vorratsgefäß zurückgeleitet. Der Transmembrandruck wurde während des Versuchs mittels eines Ventils am Modulausgang auf 2,1 bar geregelt. Durch Wassernachdosierung ins Vorratsgefäß wird der Füllstand im Vorratsgefäß bis zu einem Massenaustausch 2,5 konstant gehalten. Anschließend wurde ohne Zusatz von Wasser weiterfiltriert, bis ein Polymer mit einer Endkonzentration von 14,5 % erhalten wurde. Die weiteren Ergebnisse des Versuchs sind in Tabelle 6 zusammengefasst.

### III.Erfindungsgemäße Beispiele

### Beispiel B1:

### Kontinuierliche vierstufige Ultrafiltration mit verdünnter Fahrweise (Bla) und in konzentrierter Fahrweise (B1b)

In den Beispielen B1a und B1b wurde für die Simulation einer kontinuierlichen vierstufigen Anlage eine kontinuierliche einstufige Anlage eingesetzt, das bei jeder Stufe erhaltene Retentat gesammelt und nach Einstellen der Konzentration mit Wasser als Ausgangsmaterial für die nächste Stufe eingesetzt.

### B1a:

Die kontinuierliche Ultrafiltration wurde an Polymer 2 mit einer Feststoffkonzentration von 12,5 % durchgeführt. Es wurden zwei seriell geschaltete Module mit einem Hohlfaserdurchmesser von 1 mm und einer Filterfläche von 0,56 m² eingesetzt. Die Daten der einzelnen Stufen sind in Tabelle 1 und 6 zusammengefasst. Dabei bedeutet "PK-Feed" (PK = Polymerkonzentration) die Polymerkonzentration des Zulaufs am Eingang einer Ultrafiltrationsstufe, "PK-Bleed" die Polymerkonzentration des Retentats am Ausgang dieser Ultrafiltrationsstufe und "PK-Permeat" die Polymerkonzentration des Permeats dieser Stufe. Der Moduleingangsdruck der Stufen 1 bis 3 wurde auf 3,0 ±0,1 bar eingestellt.

Die Konzentrationen auf den einzelnen Stufen sind in Tabelle 1 dargestellt.

**Tabelle 1:**

| Stufe | Wasserzusatz Wasser:Polymerlösung | PK-Feed | PK-Bleed | PK-Permeat | PTMF¹⁾ |
|---|---|---|---|---|---|
| 1 | 1,0:1 | 6,2 % | 8,8 % | 3,4 % | 0,69 |
| 2 | 1,1:1 | 4,2 % | 6,9 % | 1,7 % | 0,42 |
| 3 | 1,2:1 | 3,2 % | 5,9 % | 1,0 % | 0,25 |
| 4 | --- | 5,9 % | 10,5 % | 1,6 % | 0,15 |

| | | | | | |
|---|---|---|---|---|---|
| ¹⁾ Polymertransmembranfluss in kg/m²h | | | | | |

Weitere Ergebnisse dieses Versuchs sind in Tabelle 6 zusammengefasst.

### B1b:

Dieses Beispiel wurde analog Beispiel B1a durchgeführt, jedoch wurde bei den einzelnen Stufen weniger Wasser zugesetzt. Der Moduleingangsdruck der Stufen 1 bis 3 wurde auf 3,8 ±0,1 bar eingestellt. Die Daten der einzelnen Stufen sind in Tabelle 2 zusammengefasst.

**Tabelle 2:**

| Stufe | Wasserzusatz (Wasser:Polymerlösung) | PK-Feed | PK-Bleed | PK-Permeat | PTMF¹⁾ |
|---|---|---|---|---|---|
| 1 | 0,2:1 | 10,6 % | 13,2 % | 6,8 % | 0,86 |
| 2 | 0,7:1 | 7,6 % | 10,8 % | 3,7 % | 0,51 |
| 3 | 0,8:1 | 6,0 % | 9,4 % | 2,2 % | 0,31 |
| 4 | --- | 9,4 % | 10,8 % | 2,1 % | 0,19 |

| | | | | | |
|---|---|---|---|---|---|
| ¹⁾ Polymertransmembranfluss in kg/m²h | | | | | |

Weitere Ergebnisse dieses Versuchs sind in Tabelle 6 zusammengefasst.

### Beispiel B2:

### Kontinuierliche zweistufige Ultrafiltration

Die Ultrafiltration wurde analog zu Beispiel B1 durchgeführt, jedoch wurden auf der ersten Stufe Module mit einer Filterfläche von 0,56 m² und einem Hohlfaserdurchmesser von 1 mm und auf der zweiten Stufe Module mit einer Filterfläche von 0,44 m² und einem Hohlfaserdurchmesser von 2 mm eingesetzt. Der Moduleingangsdruck der ersten Stufe wurde hierbei bei einem Transmembrandruck von 2,1 bar und einer Anströmung von 0,5 m/s auf 4 bar eingestellt. Die Konstanthaltung des Drucks erfolgt unter Variation der Ausgangskonzentration. Die auf Stufe 1 erhaltenen Retentate wurden ohne weiteren Wasserzusatz in die zweite Stufe eingespeist. Hierbei diente der Eingangsdruck als Sollwert für die Regelung des Retentataustrags. Es wurden unter diesen Bedingungen fünf Versuche B2a bis B2e durchgeführt, die sich im Wesentlichen im Feststoffgehalt des erhaltenen Retentats unterscheiden. Die Daten der erhaltenen Retentate sind in Tabelle 3 und Tabelle 6 zusammengefasst.

**Tabelle 3:**

| Polymertransmembranflüsse von Stufe 1 und Stufe 2 | | |
|---|---|---|
| | Polymertransmembranfluss Stufe 1 in kg/m²h | Polymertransmembranfluss Stufe 2 in kg/m²h |
| B2a | 0,47 | 0,16 |
| B2b | 0,42 | 0,12 |
| B2c | 0,40 | 0,12 |
| B2d | 0,35 | 0,11 |
| B2e | 0,31 | 0,07 |
| VB3 | 0,20 (Batch) | --- |

### Beispiel B3:

### Drucklos gekoppelte kontinuierliche vierstufige Ultrafiltration mit druckgeregeltem Retentataustrag

Die Ultrafiltration wurde in einer wie in Figur 2 beschriebenen Apparatur durchgeführt, die jedoch auch in der Stufe IV eine geregelte Zuführung (vgl. Figur 2: 110/113) für wässriges Medium aufweist. Über diese Zuführungen wurde in den Stufen II, III und IV Wasser zudosiert. Es wurden pro Stufe Module mit einer Filterfläche von 0,56 m² und einem Hohlfaserdurchmesser von 1 mm eingesetzt, wobei in den Stufen I bis III eine Anströmung der Module von 0,5 m/s eingestellt wurde. Es wurde eine 9 Gew.-%ige Lösung des Polymers 2 eingesetzt. Die Zudosierung bezogen auf den Feed (Verhältnis von Wasser zu Polymerlösung) lag bei 0,53 (Stufe II), 0,62 (Stufe III) und 0,43 (Stufe IV). Der Transmembrandruck der Stufen I bis III wurde auf 2,2 bar eingeregelt. Die Steuerung des Retentataustrags erfolgt druckgeregelt über den Eingangsdruck der letzten Stufe (4,8 bar bei 0,4 m/s Anströmung). Die Ergebnisse sind in IV., Tabelle 4 und Tabelle 6, zusammengefasst.

### IV. Anwendungstechnische Eigenschaften der erfindungsgemäßen und nichterfindungsgemäßen Retentate

Die in Vergleichsbeispiel VB3 und erfindungsgemäßen Beispielen B2a bis B2e und B3 erhaltenen Retentate wurden auf ihre Eignung als Entwässerungs- und Retentionsmittel bei der Herstellung von Papier auf zwei Stoffmodellen (Modell 1: nicht deinktes Altpapier für Karton und Liner; Modell 2: aufgebessertes gebleichtes Zeitungsdruckpapier) getestet. Als Maß für die Entwässerungsleistung wurde die Entwässerungszeit nach Schopper-Riegler bestimmt. Als Maß für die Reduktion von Faser, Fein- und Füllstoffen wurde die optische Durchlässigkeit des ablaufenden Siebwassers herangezogen. Die Messungen erfolgen mit Hilfe eines Photometers der Fa. Lange bei 340 nm. Die im Folgenden angegebenen Messergebnisse sind Mittelwerte aus diesen Messungen. Die Retentions- und Entwässerungsmittel wurden pro Stoffmodell bei 4 Messungen mit Konzentrationen von 0,05 % und 0,1 % und 0,15 % und 0,2 % (erfindungsgemäße Retentate des Beispiels B2a bis B2e und B3, Retentat des nichterfindungsgemäßen Beispiels VB3) bzw. 0,1 % und 0,2 % und 0,3 % und 0,4 % (unfiltriertes Polymer) dosiert. Mit Summenparametern wird aus diesen 8 Messungen die relative Aufwandmenge an Retentat zum Erzielen des gleichen anwendungstechnischen Ergebnisses wie mit unfiltriertem Polymer berechnet, wobei die jeweilige Polymermenge als Feststoff gerechnet wird. Die Daten und Ergebnisse sind in Tabelle 4 zusammengefasst.

**Tabelle 4:**

| Eduktkonzentration und Produkteigenschaften nach 2 Stufen | | | | | |
|---|---|---|---|---|---|
| | Konzentration Edukt | Abtrennung | Feststoff Retentat | Viskosität Retentat¹⁾ | Relative Aufwandmenge²⁾ |
| B2a | 6,3 % | 53 % | 14,2 % | 183 mPas | 53 % |
| B2b | 5,0 % | 55 % | 13,8 % | 190 mPas | 51 % |
| B2c | 4,2 % | 55 % | 13,1 % | 198 mPas | 51 % |
| B2d | 3,6 % | 56 % | 12,0 % | 159 mPas | 52 % |
| B2e | 3,1 % | 54 % | 10,2 % | 102 mPas | 50 % |
| B3 | 9,0 % | 54 % | 10,5 % | 136 mPas | 53 % |
| VB3 | - (Batch) | 54 % | 14,5 % | 850 mPas | 53 % |

| | | | | | |
|---|---|---|---|---|---|
| ¹⁾ Bestimmt nach Brookfield, 20 °C | | | | | |
| ²⁾ Menge an Polymeren, gerechnet als Feststoff zum Erzielen des gleichen anwendungstechnischen Effekts wie mit unfiltriertem Eduktpolymer; bestimmt wurde die relative Aufwandmenge an zwei Stoffmodellen aus dem Mittelwert der Messungen der Entwässerungszeit nach Schopper-Riegler und der optischen Durchlässigkeit des Siebwassers. | | | | | |

### VI. Kopplung der kontinuierlichen Ultrafiltration mit kontinuierlicher umgekehrter Osmose

In der Laborapparatur wurde eine Membrantestzelle verwendet, die zur Aufnahme von Flachmembranen geeignet ist. Die Membranfläche betrug 80 cm², der Retentatströmungskanal war 40 mm breit und 1,2 mm hoch und mit einem Spacer bestückt. Die Zelle ist damit der Scaledown eines Wickelmodules. Die Zelle war folgendermaßen in einen Umpumpkreis integriert:
- Kreislaufbehälter
- Hochdruckpumpe
- Wärmetauscher
- Zelle
- Druckhalteventil
- Kreislaufbehälter

Der Holdup des Kreises betrug ca. 2,5 l.

Im Kreis wurden der Durchfluss durch die Zelle, die Temperatur und die Drücke vor und nach der Zelle gemessen. Geregelt wurde die Temperatur (über den Wärmetauscher), der Durchfluss (über die Drehzahl der Pumpe) und der Druck von der Zelle (mit dem Druckhalteventil). Die Bestimmung des Permeatflusses erfolgte mittels Wägung.

Gesteuert über eine Standregelung im Kreislaufbehälter konnte Feedlösung (Permeat aus der Fraktionierung) in den Kreis eingespeist und mittels einer regelbaren Pumpe Retentat aus dem Kreis entnommen werden.

Der Pumpkreis wurde bis zur Standhaltung mit Feedlösung gefüllt und die reverse Osmose gestartet. Folgende Prozessparameter wurden eingehalten:
- Druck vor der Zelle = 50 bar
- Temperatur im Kreis = 50 °C
- Durchfluss durch die Zelle = 66 l/h
   (Membranüberströmung = 0,38 m/s)

In einer ersten Phase erfolgte dann die Aufkonzentration auf den gewünschten Endfestgehalt durch Permeatabnahme und standgeregelte Nachdosierung von Feedlösung in den Kreis. Danach wurde auf kontinuierlichen Feed & Bleed-Betrieb umgestellt. D. h. es wurde Permeat und Retentat ausgeschleust und Feedlösung standgeregelt nachdosiert. Die Retentatabnahme wurde dabei so eingeregelt, dass der Festgehalt im Kreis auf dem gewünschten Wert gehalten wurde.

Zur Simulierung einer zweistufigen Feed & Bleed-Kaskade wurde Retentat ein zweites Mal wie oben beschrieben als Feedlösung eingesetzt.

Nach Gleichgewichtseinstellung erfolgte die Aufnahme aller Messdaten für den Feed & Bleed-Betrieb.

Die mit den verschiedenen Membranen erhaltenen Messdaten sind in Tabelle 5 dargestellt:

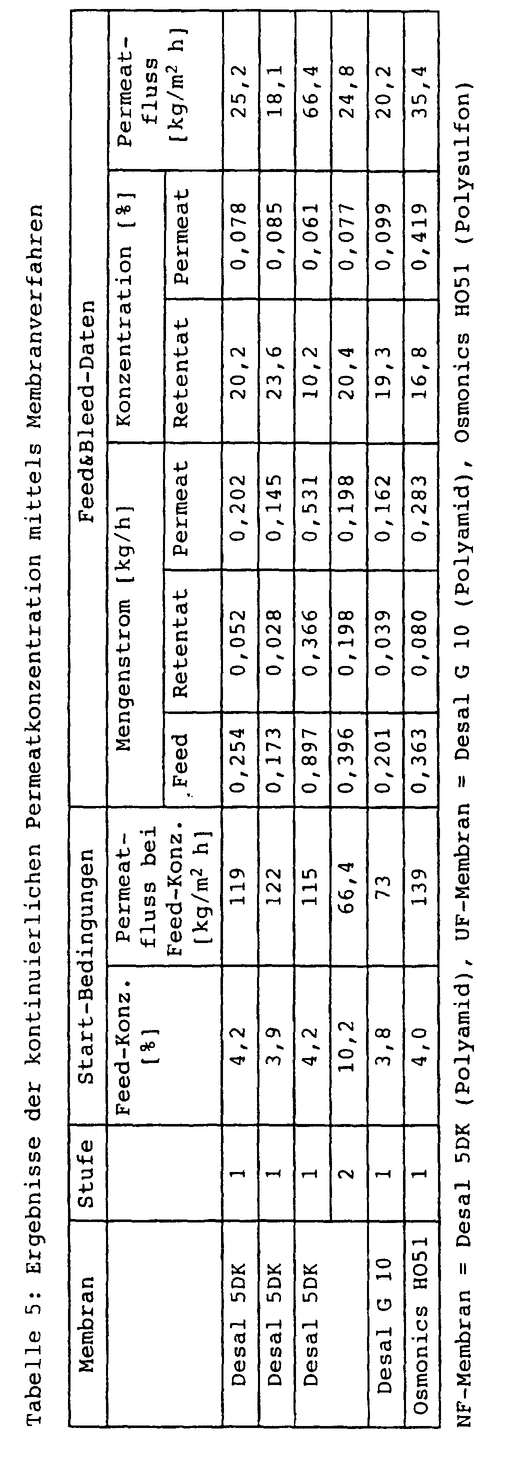

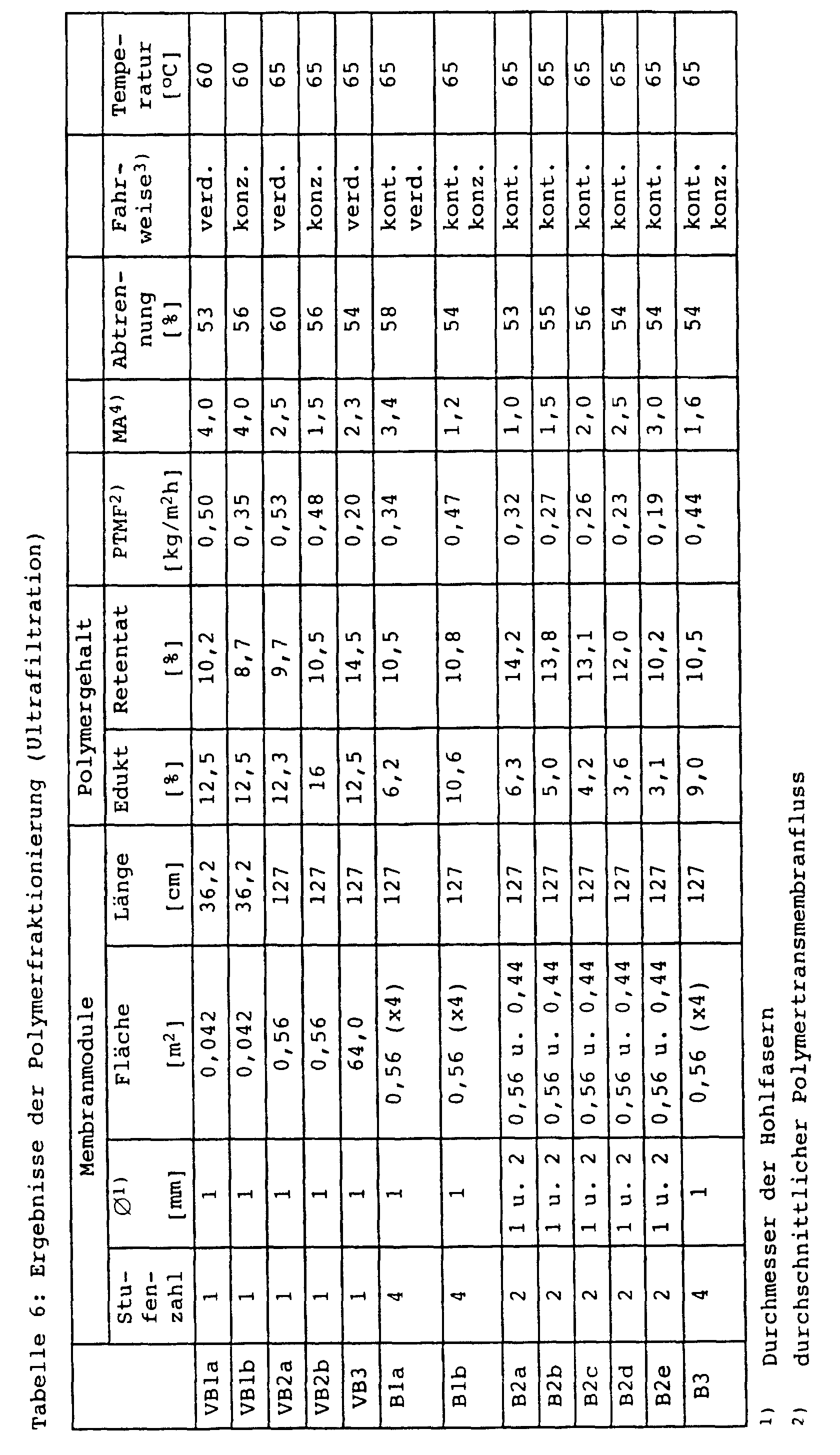

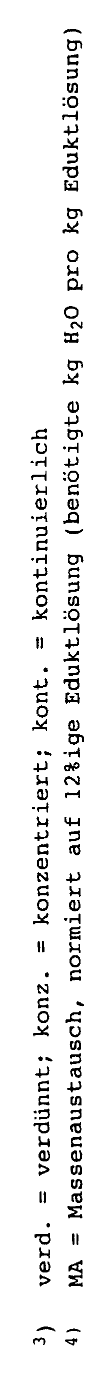

## Patentansprüche

1. Verfahren zur Fraktionierung von in Wasser löslichen oder 5 dispergierbaren synthetischen aminogruppenhaltigen Polymeren durch Ultrafiltration, wobei das Verfahren folgende Schritte umfasst:
a) Kontinuierliches Leiten der Polymerlösung oder -dispersion zu einer Ultrafiltrationseinheit und Vermischen mit aus Schritt d) rückgeführtem Retentat und gegebenenfalls im Wesentlichen polymerfreiem wässrigem Medium,
b) Auftrennen des Gemischs in der Ultrafiltrationseinheit in ein Permeat und ein Retentat,
c) Ausleiten des Permeats aus dem Verfahren,
d) Austragen eines Teils des Retentats; Rückführen des anderen Teils des Retentats in Schritt a),
e) Leiten des in Schritt d) ausgetragenen Teils des Retentats in wenigstens eine weitere Ultrafiltrationseinheit und Behandlung nach einem Verfahren mit den Schritten a) bis d).

2. Verfahren nach Anspruch 1, wobei das Verfahren eine vorgeschaltete Anfahrphase umfasst, die folgende Schritte aufweist:
a) Kontinuierliches Leiten der Polymerlösung oder -dispersion zu einer Ultrafiltrationseinheit,
b) Auftrennen der Polymerlösung oder -dispersion in der Ultrafiltrationseinheit in ein Permeat und ein Retentat,
c) Ausleiten des Permeats aus dem Verfahren,
d) Vermischen des gesamten Retentats mit der Polymerlösung oder -dispersion im Schritt a) und gegebenenfalls mit im Wesentlichen polymerfreiem Medium und Leiten des Gemischs zu der Ultrafiltrationseinheit, bis im Retentat der gewünschte Fraktionierungsgrad erreicht ist.

3. Verfahren nach Anspruch 1 oder 2, wobei die Polymerlösung oder -dispersion einen Polymergehalt von 3 bis 30 Gew.-% aufweist.

4. Verfahren nach einem der Ansprüche 1 bis 3, wobei man ein Retentat mit einem Polymergehalt von größer als 5 Gew.-% austrägt.

5. Verfahren nach einem der vorhergehenden Ansprüche, wobei man 20 bis 90 Gew.-% des eingesetzten Polymeren als Permeat abtrennt.

6. Verfahren nach einem der vorhergehenden Ansprüche, wobei man die Ultrafiltration an Membranen mit einer Trenngrenze für Polymere mit Molmassen von mindestens 1 000 bis 500 000 oder an Membranen mit einem Porendurchmesser von 0,01 bis 10 µm durchführt.

7. Verfahren nach einem der vorhergehenden Ansprüche, wobei man die Membranen in Form von Rohren, Hohlfasern, Plattengeräten, Hohlfasermodulen, Kissenmodulen oder Spiralwickelmodulen einsetzt.

8. Verfahren nach einem der vorhergehenden Ansprüche, wobei man die Ultrafiltration bei einem Eingangsdruck im Bereich von 1 bis 20 bar durchführt.

9. Verfahren nach einem der vorhergehenden Ansprüche, wobei man die Ultrafiltration bei einem Transmembrandruck im Bereich von 0,5 bis 10 bar durchführt.

10. Verfahren nach einem der vorhergehenden Ansprüche, wobei man die Ultrafiltration bei einer Anströmung von 0,01 bis 10 m/s durchführt.

11. Verfahren nach einem der vorhergehenden Ansprüche, wobei man auf der letzten Stufe Ultrafiltrationseinheiten mit einem größeren Durchmesser bzw. einer größeren Kanalweite einsetzt.

12. Verfahren nach einem der vorhergehenden Ansprüche, wobei die aminogruppenhaltigen Polymeren ausgewählt sind unter Polyalkylenpolyaminen, Polyamidoaminen, Polyalkylenglykolpolyaminen, mit Ethylenimin gepropften und anschließend mit mindestens bifunktionellen Vernetzern umgesetzten Polyamidoaminen und Gemischen und Copolymerisaten davon.

## Claims

1. A process for the fractionation of water-soluble or water-dispersible synthetic amino-containing polymers by ultrafiltration, wherein the process comprises the following steps:
a) continuous passage of the polymer solution or dispersion to an ultrafiltration unit and mixing with retentate recycled from step d) and, if required, with essentially polymer-free aqueous medium,
b) separation of the mixture in the ultrafiltration unit into a permeate and a retentate,
c) discharge of the permeate from the process,
d) discharge of some of the retentate; recycling of the remainder of the retentate to step a),
e) passage of the portion of the retentate discharged in step d) into at least one further ultrafiltration unit and treatment by a process having the steps a) to d).

2. A process as claimed in claim 1, which comprises an upstream startup phase which has the following steps:
a) continuous passage of the polymer solution or dispersion to an ultrafiltration unit,
b) separation of the polymer solution or dispersion in the ultrafiltration unit into a permeate and a retentate,
c) discharge of the permeate from the process,
d) mixing of the total retentate with the polymer solution or dispersion in step a) and, if required, with essentially polymer-free medium and passage of the mixture to the ultrafiltration unit until the desired degree of fractionation has been reached in the retentate.

3. A process as claimed in claim 1 or 2, wherein the polymer solution or dispersion has a polymer content of from 3 to 30% by weight.

4. A process as claimed in any of claims 1 to 3, wherein a retentate having a polymer content greater than 5% by weight is discharged.

5. A process as claimed in any of the preceding claims, wherein from 20 to 90% by weight of the polymer used is separated off as permeate.

6. A process as claimed in any of the preceding claims, wherein the ultrafiltration is carried out through membranes having a cut-off for polymers with molar masses of from at least 1000 to 500 000 or through membranes having a pore diameter of from 0.01 to 10 µm.

7. A process as claimed in any of the preceding claims, wherein the membranes are used in the form of tubes, hollow fibers, plate-and-frame apparatuses, hollow fiber modules, cushion modules or spiral-wound modules.

8. A process as claimed in any of the preceding claims, wherein the ultrafiltration is carried out at an inlet pressure of from 1 to 20 bar.

9. A process as claimed in any of the preceding claims, wherein the ultrafiltration is carried out at a transmembrane pressure of from 0.5 to 10 bar.

10. A process as claimed in any of the preceding claims, wherein the ultrafiltration is carried out at an inflow of from 0.01 to 10 m/s.

11. A process as claimed in any of the preceding claims, wherein ultrafiltration units having a larger diameter or a larger channel width are used in the last stage.

12. A process as claimed in any of the preceding claims, wherein the amino-containing polymers are selected from polyalkylenepolyamines, polyamidoamines, polyalkylene glycol polyamines, polyamidoamines grafted with ethyleneimine and then reacted with at least bifunctional crosslinking agents, and mixtures and copolymers thereof.

## Revendications

1. Procédé de fractionnement de polymères synthétiques contenant des groupes amino, solubles ou dispersables dans l'eau, par ultrafiltration, le procédé comprenant les étapes suivantes :
a) une amenée continue de la solution ou dispersion de polymère à une unité d'ultrafiltration et un mélange avec du rétentat recyclé depuis l'étape d) et éventuellement du milieu aqueux sensiblement exempt de polymère,
b) une séparation du mélange dans l'unité d'ultrafiltration en un perméat et un rétentat,
c) une évacuation du perméat hors du procédé,
d) un déchargement d'une partie du rétentat, un recyclage de l'autre partie du rétentat dans l'étape a),
e) une amenée de la partie du rétentat qui a été déchargée dans l'étape d) dans au moins une autre unité d'ultrafiltration et un traitement selon un procédé comprenant les étapes a) à d).

2. Procédé suivant la revendication 1, qui comprend une phase de démarrage montée en amont, qui comporte les étapes suivantes :
a) une amenée continue de la solution ou dispersion de polymère à une unité d'ultrafiltration,
b) une séparation de la solution ou dispersion de polymère dans l'unité d'ultrafiltration en un perméat et un rétentat,
c) une évacuation du perméat hors du procédé,
d) un mélange de la totalité du rétentat avec la solution ou dispersion de polymère dans l'étape a) et éventuellement avec un milieu sensiblement exempt de polymère et une amenée du mélange à l'unité d'ultrafiltration, jusqu'à ce que le degré de fractionnement souhaité soit atteint dans le rétentat.

3. Procédé suivant la revendication 1 ou 2, dans lequel la solution ou dispersion de polymère présente une teneur en polymère de 3 à 30% en poids.

4. Procédé suivant l'une des revendications 1 à 3, dans lequel on décharge un rétentat présentant une teneur en polymère supérieure à 5% en poids.

5. Procédé suivant l'une des revendications précédentes, dans lequel on isole 20 à 90% en poids du polymère mis en oeuvre sous la forme de perméat.

6. Procédé suivant l'une des revendications précédentes, dans lequel on effectue l'ultrafiltration sur des membranes ayant une limite de coupe pour des polymères ayant des masses molaires d'au moins 1000 à 500.000 ou sur des membranes ayant un diamètre de pore de 0,01 à 10 µm.

7. Procédé suivant l'une des revendications précédentes, dans lequel on met en oeuvre les membranes sous la forme de tubes, de fibres creuses, d'instruments à plateaux, de modules à fibres creuses, de modules en coussin ou de modules en rouleau spiralé.

8. Procédé suivant l'une des revendications précédentes, dans lequel on effectue l'ultrafiltration à une pression d'entrée de l'ordre de 1 à 20 bars.

9. Procédé suivant l'une des revendications précédentes, dans lequel on effectue l'ultrafiltration à une pression transmembranaire de l'ordre de 0,5 à 10 bars.

10. Procédé suivant l'une des revendications précédentes, dans lequel on effectue l'ultrafiltration avec un afflux de 0,01 à 10 m/s.

11. Procédé suivant l'une des revendications précédentes, dans lequel on met en oeuvre, à la dernière étape, des unités d'ultrafiltration ayant un diamètre plus grand ou une ouverture de canal plus grande.

12. Procédé suivant l'une des revendications précédentes, dans lequel les polymères contenant des groupes amino sont choisis parmi des polyalkylènepolyamines, des polyamidoamines, des polyalkylèneglycolpolyamines, des polyamidoamines greffées avec de l'éthylèneimine et ensuite mises à réagir avec des agents de réticulation au moins bifonctionnels et des mélanges et copolymères de ceux-ci.
